# EUROPÄISCHE PATENTSCHRIFT

(11) **EP 1 034 950 B1**
(45) Veröffentlichungstag und Bekanntmachung des Hinweises auf die Patenterteilung: **09.06.2004**
(21) Anmeldenummer: 00103507.0
(22) Anmeldetag: 18.02.2000
(51) Int. Cl.: B60H 1/00, H02H 7/093

(54) **Regler für Heizungs-und Klimageräte in Kraftfahrzeugen**
Control device for heating or air conditioning apparatus of a motor vehicle
Dispositif de commande pour appareil de chauffage ou de conditionnement d'air de véhicule automobile

(30) Priorität: 12.03.1999 DE 19911036
(43) Veröffentlichungstag der Anmeldung: 13.09.2000
(73) Patentinhaber: Siemens Aktiengesellschaft, 80333 München (DE)
(72) Erfinder: Strobel, Henry, 65843 Sulzbach (DE)

(56) Entgegenhaltungen:
- DE-A- 4 040 847
- DE-A- 4 340 580
- US-A- 4 194 145

## Beschreibung

Die Erfindung betrifft einen Regler für Heizungs- und Klimageräte in Kraftfahrzeugen mit einem von einem elektrisch kommutierten Gleichstrommotor angetriebenen Sauglüfter, in dessen Ansaugluftstrom ein Temperatur-Messfühler angeordnet ist, sowie einer den Gleichstrommotor speisenden Ansteuerelektronik, die eine Anlaufspannung für den Gleichstrommotor sowie eine periodisch variierende Spannung an einer Antriebswicklung des Gleichstrommotors erzeugt, wobei der Regler mit der Ansteuerelektronik und/oder der Antriebswicklung des Motors verbindbare Messmittel zur Bestimmung eines zu einer Frequenz der periodischen Spannung an der Antriebswicklung des Gleichstrommotors proportionalen Messwerts aufweist. Ein derartiger Regler ist aus der DE 40 40 847 A1 bekannt.

Entsprechende Regler für Heizungs- und Klimageräte werden in Kraftfahrzeugen zur Bestimmung der Innenraumtemperatur eingesetzt. Mit Hilfe des elektrisch betriebenen Sauglüfters wird Luft aus dem Innenraum des Fahrzeuges angesaugt und an einem Temperatur-Messfühler vorbeigeführt. Die mit dem Temperatur-Messfühler gemessene Temperatur dient zur Regelung des Heizungs- und Klimagerätes. Da aus dem Fahrgastraum nur eine geringe Luftmenge angesaugt wird, werden zum Antrieb des Sauglüfters elektrisch kommutierte Gleichstrommotoren mit geringer Leistung eingesetzt, die zudem den Vorteil einer geringen Geräuschentwicklung aufweisen. Um einen sicheren Anlauf des elektrisch kommutierten Gleichstrommotors zu gewährleisten, ist es bekannt, entsprechende Motoren einzusetzen, deren Anlauf mit Hilfe eines integrierten Hall-Sensors sichergestellt wird. Bei Hall-Sensoren handelt es sich jedoch um verhältnismäßig teure Bauteile. Aus der deutschen Patentanmeldung DE 43 40 580 ist weiterhin ein Regler von Heizungs- und Klimageräten bekannt, bei dem auf den Hall-Sensor verzichtet wird. Um dennoch ein sicheres Anlaufen des elektrisch kommutierten Gleichstrommotors zu gewährleisten, wird dort vorgeschlagen, im Stromkreis des Gleichstrommotors einen von einem Zeitschaltglied angesteuerten Unterbrecher anzuordnen, mit dessen Hilfe die Motorspeisespannung periodisch impulsartig unterbrochen wird. Aufgrund dieser Maßnahme erhält der Motor jeweils beim erneuten Aufbau der Speisespannung in der Anlaufphase in regelmäßigen Zeitabständen Drehimpulse, die aufgrund ihrer ständigen Wiederholung das Anlaufen gewährleisten. Durch die Masseträgheit des drehenden Lüfters wird die nur Bruchteile einer Sekunde währende Stromunterbrechung überbrückt, so daß eine das Meßergebnis in irgendeiner Weise beeinträchtigende Verminderung des Meßluftstroms oder eine Überbelastung des Motors nicht auftreten. Erfolgt jedoch trotz der vorgesehenen Maßnahme kein Motoranlauf, beziehungsweise bleibt der Motor aufgrund irgendwelcher Gründe während des Betriebs stehen, so hat dies zur Folge, daß keine Luft aus dem Innenraum des Fahrzeuges gefördert und an dem Temperatur-Meßfühler vorbeigeführt wird, wodurch die Klimaregelung von einem falschen Ist-Wert der Innenraumtemperatur ausgeht.

Hier setzt nun die Erfindung an, deren Aufgabe es ist, einen verbesserten Regler für Heizungs- und Klimageräte in Kraftfahrzeugen vorzuschlagen, bei dem der fehlende Antrieb des Sauglüfters durch den Gleichstrommotor bereits frühzeitig erkannt wird.
Eine weitere Aufgabe der Erfindung ist es, ein Verfahren zum Betreiben eines elektrisch kommutierten Gleichstrommotors anzugeben, der in dem vorgenannten Regler einsetzbar ist.

Die erstgenannte Aufgabe wird durch einen Regler für Heizungs- und Klimageräte in Kraftfahrzeugen mit den Merkmalen des Anspruchs 1 gelöst. Als zu einer Frequenz proportionale Messwerte werden dabei auch solche verstanden, die sich umgekehrt proportional zur Frequenz verhalten.

Bei dem erfindungsgemäßen Regler tritt im Betrieb in an sich bekannter Weise an der Antriebswicklung, eine periodisch variierende Spannung auf. Wie aus der DE 43 40 580 bekannt ist, kann diese Motorspannung kurzzeitig unterbrochen werden. Nach Beendigung der Unterbrechung erhält der Motor somit durch den Wiederaufbau der Spannung einen neuen Impuls, der bei stehendem Motor als Anlaufimpuls wirkt. Es ist jedoch in äquivalenter Weise auch möglich, die Spannung nicht zu unterbrechen, sondern kurzzeitig auf einem konstanten Spannungsniveau zu belassen. Auch hierdurch erhält der Motor kurzzeitig keine Antriebsenergie. Durch die nachfolgende Spannungsänderung erhält der Motor auch bei dieser Vorgehensweise anschließend Anlaufimpulse. Durch die erfindungsgemäßen Mittel zur Bestimmung von Messwerten die der Frequenz der Spannung an der Antriebswicklung zu unterschiedlichen Zeiten proportional sind, steht nun ein sicheres Mittel zur Verfügung, um zu erkennen, ob der Motor mit Antriebsenergie versorgt wird.

In einer Ausführungsvariante des erfindungsgemäßen Reglers ist vorgesehen, dass die Motorspannung während der gesamten Motorlaufzeit periodisch kurzzeitig unterbrochen bzw. periodisch kurzzeitig auf einem konstanten Spannungsniveau gehalten wird. In diesem Falle wird das erste Zeitintervall Δt1 vorzugsweise direkt anschließend an das Zeitintervall mit kurzzeitig ausgesetzter oder konstanter Spannung an der Antriebswicklung des Gleichstrommotors anschließen, und es werden frequenzproportionale Messwerte in verschiedenen Zeitintervallen Δt1 und Δt2 bestimmt und ausgewertet. Ist die Frequenz im zweiten Zeitintervall Δt2 größer als die Frequenz im ersten Zeitintervall Δt1, so kann davon ausgegangen werden, dass der Motor sicher läuft. Ist diese Bedingung nicht erfüllt, so können dem Motor erneut Anlaufimpulse in bekannter Weise zugeführt werden.

Zum Vergleich der frequenzproportionalen Messwerte, und damit zur Auswertung, ist ferner ein Komparator vorgesehen. Der Komparator liefert ein Ausgangssignal, das vom Vergleich der frequenzproportionalen Messwerte der Zeitintervalle Δt1 und Δt2 abhängt. Abhängig vom Ausgangssignal des Komparators können dann Anlaufimpulse für den Gleichstrommotor generiert werden, falls dies erforderlich ist.

Bei dem erfindungsgemäßen Regler können sowohl die bekannten elektrisch kommutierten Gleichstrommotoren mit integriertem Hall-Sensor eingesetzt werden als auch elektrisch kommutierte Gleichstrommotoren ohne Hall-Sensor, die neben der Antriebswicklung eine Hilfswicklung aufweisen.

Das erfindungsgemäße Verfahren zum Betreiben eines elektrisch kommutierten Gleichstrommotors weist die in Anspruch 10 angegebenen Merkmale auf. Vorzugsweise werden die zu den Frequenzen f1 und f2 proportionalen ersten und zweiten Meßwerte miteinander verglichen, und dem Motor wird ein Anlaufsignal zugeführt, wenn der zu der Frequenz f2 proportionale zweite Meßwert kleiner oder gleich dem zu der Frequenz f1 proportionalen ersten Meßwert ist. Bei Meßwerten, die sich umgekehrt proportional zur Frequenz verhalten, gilt sinngemäß das Umgekehrte.

In einer besonderen Ausführungsform ist vorgesehen, aus mindestens einem der den Frequenzen f1 beziehungsweise f2 proportionalen Meßwerte die Drehzahl des Gleichstrommotors zu bestimmen.

Die Erfindung wird nachfolgend anhand eines Ausführungsbeispiels und der Zeichnung näher beschrieben.

Es zeigen:
- Figur 1: eine vereinfachte Darstellung des Motors mit zugehöriger Elektronik,
- Figur 2: den Verlauf der Signalspannung über der Zeit,
- Figur 3: den vollständigen Regler,
- Figur 4: eine elektronische Schaltung zur Ansteuerung des Motors.

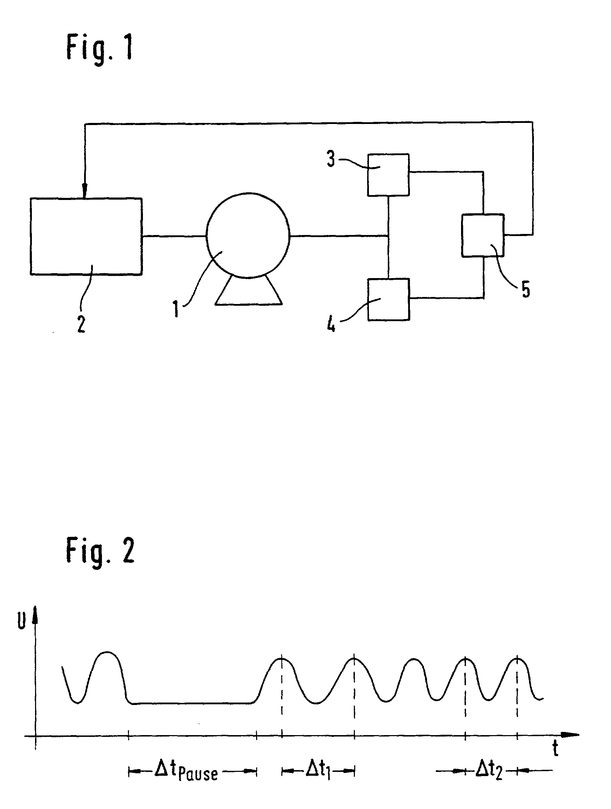

Figur 1 zeigt schematisch den elektrisch kommutierten Gleichstrommotor 1 zusammen mit den wesentlichen Elektronikkomponenten. Der Motor 1 wird durch eine Ansteuerelektronik 2 elektrisch angesteuert. Die Spannung an der Antriebswicklung des Motors 1 wird abgegriffen und den Meßmitteln 3, 4 zugeführt, die innerhalb eines Zeitintervalls Δt1 beziehungsweise Δt2 einen zur Frequenz der Motorspannung proportionalen Meßwert generieren.

Hierzu gibt es verschiedene an sich bekannte Möglichkeiten. Beispielsweise kann die Zeit von einem Maximum des Spannungsverlaufs bis zum nächsten Maximum des Spannungsverlaufs registriert werden. Es ist auch möglich, die Zeit von einem Spannungsmaximum bis zum nächsten Spannungsminimum zu registrieren. Es ist auch möglich, von einem beliebigen Spannungswert auszugehen und die Zeit bis zum Wiedererreichen dieses beliebigen Spannungswertes zu registrieren. Zur Verbesserung der Meßgenauigkeit kann die Messung auch über mehrere Perioden ausgedehnt werden. Weiterhin kann ein Zeitintervall Δt1 bzw. Δt2 auch in Teilintervalle aufgeteilt werden, und es kann eine Mittelwertbildung über die Meßwerte der einzelnen Teilintervalle durchgeführt werden.

In allen Fällen kann beispielsweise zu Beginn eines Zeitintervalls ein Integrator gestartet werden, der eine Gleichspannung aufintegriert. Die Integration wird zum Ende des Zeitintervalls beendet. Der Kehrwert der integrierten Gleichspannung ist dann proportional zur Frequenz der am Motor anliegenden Spannung. Auf die Kehrwertbildung kann auch verzichtet werden.

Die Kenntnis des absoluten Frequenzwertes ist nicht erforderlich, da lediglich von Interesse ist, wie sich die Frequenz mit zunehmender Zeitdauer entwickelt. Hierzu ist daher die Kenntnis der in den Zeitintervallen Δt1 beziehungsweise Δt2 gewonnen, frequenzproportionalen Signale ausreichend. Die Mittel zur Bestimmung der frequenzproportionalen Meßwerte können auch ein einziges Meßmittel sowie ein Speicherelement zur Abspeicherung der Meßwerte im Zeitintervall Δt1 bzw. Δt2 enthalten.

Zum Vergleich der mit den Meßmitteln 3, 4 gewonnenen frequenzproportionalen Signale ist ferner ein Komparator 5 vorgesehen. Das Ausgangssignal des Komparators 5 wird der Ansteuerelektronik 2 zugeführt. Abhängig vom Ausgangssignal des Komparators 5 wird durch die Ansteuerelektronik 2 bei Bedarf eine Anlaufspannung generiert. Hierzu wird die periodisch variierende Spannung kurzzeitig unterbrochen oder auf einem konstanten Spannungsniveau gehalten. Der nachfolgende Spannungsimpuls führt zum Anlaufen des Gleichstrommotors.

In Figur 2 ist der Spannungsverlauf an der Antriebswicklung des Motors 1 dargestellt. Die periodisch variierende Spannung wird für eine kurze Zeitdauer Δt_{Pause} unterbrochen oder auf einem konstanten Wert gehalten. Durch den Spannungsimpuls am Ende des Zeitintervalls Δt_{Pause} erhält der Motor einen Anlaufimpuls. In einem ersten Zeitintervall Δt1 wird dann ein zur Spannungsfrequenz proportionaler Meßwert ermittelt. Das gleiche geschieht in einem späteren Zeitintervall Δt2. Die in den beiden Zeitintervallen ermittelten Meßwerte geben daher Aufschluß darüber, ob der Motor richtig läuft. Ist die Frequenz im Zeitintervall Δt2 größer als die Frequenz im Zeitintervall Δt1, so kann davon ausgegangen werden, daß der Motorlauf korrekt erfolgt. Ist dagegen die Frequenz im Zeitintervall Δt2 kleiner oder gleich der Frequenz im Zeitintervall Δt1, so bedeutet dies, daß die Drehzahl des Motors abnimmt bzw. dieser nicht korrekt läuft. Ist dieser Fall detektiert, so kann durch die Ansteuerelektronik 2 frühzeitig ein erneuter Anlaufimpuls zum Motor ausgegeben werden. Anlaufimpulse werden ebenfalls ausgegeben, wenn die in den beiden Zeitintervallen detektierten Frequenzen gleich sind. Hierzu wird wiederum die Spannung an der Antriebswicklung des Motors kurzzeitig unterbrochen beziehungsweise auf einen konstanten Wert gesetzt. Durch dieses frühzeitige Eingreifen kann eine Störung des Motorlaufs auch frühzeitig verhindert werden, so daß eine Verfälschung der Meßwerte an einem Temperatur-Meßfühler vorgebeugt wird.

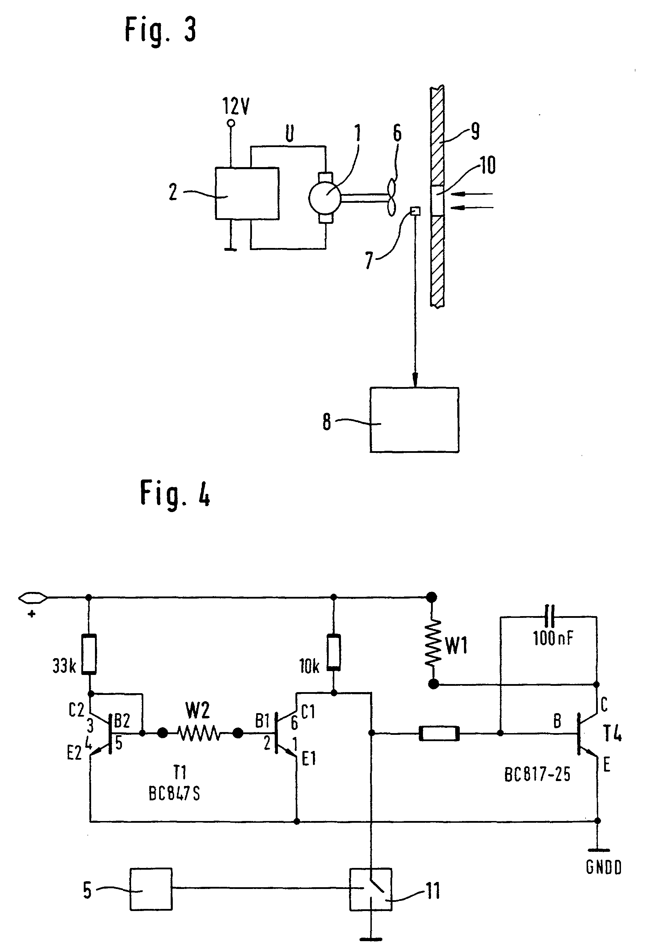

in Figur 3 ist der komplette Regler dargestellt. Er umfaßt den elektrisch kommutierten Gleichstrommotor 1, der von der Ansteuerelektronik 2 versorgt wird. Auf der Welle des Motors 1 ist ein Lüfterrad 6 montiert, das Luft aus dem Innenraum des Kraftfahrzeuges an einem Temperatur-Meßfühler 7 vorbeiführt. Gleichstrommotor 6 und Lüfterrad 6 bilden dabei einen Sauglüfter. Der Temperatur-Meßfühler 7 ist mit einem Mikroprozessor 8 verbunden, der zur Steuerung der Klimaanlage dient. Der komplette Regler ist beispielsweise hinter einer Frontblende 9 des Bediengerätes der Heizungs- und Klimaanlage angeordnet, wobei die Frontblende 9 eine Öffnung 10 aufweist, durch die die Luft aus dem Innenraum des Kraftfahrzeuges angesaugt wird.

In Figur 4 ist eine Ansteuerschaltung für den elektrisch kommutierten Gleichstrommotor dargestellt. Die Ansteuerschaltung versorgt die Antriebswicklung W1 des Gleichstrommotors mit einer zeitlich variierenden Spannung. Zur Erzeugung dieser Spannung wird eine Hilfswicklung W2 benötigt. Durch Anlegen einer Spannung an die Antriebswicklung W1 wird diese in Bewegung gesetzt. Hierdurch wird in der Hilfswicklung W2 eine Spannung induziert, die nun über die dargestellte Schaltung mit Transistoren T, Widerständen R und Kondensatoren C in an sich bekannter Weise die mit der Motordrehung variierende Spannung an der Antriebswicklung W1 erzeugt. Eine entsprechende Schaltung wird beispielsweise zum Betrieb des Sensorgebläses S 2000 der Firma Pabst-Motoren GmbH, Sankt Georgen eingesetzt. Die dargestellte an sich bekannte Schaltung ist erfindungsgemäß mit dem Komparator 5 über einen intelligenten Schalter 11 verbunden, der die Spannung an der Antriebswicklung des Motors kurzzeitig zur Generierung eines Anlaufimpulses unterbrechen kann.

## Patentansprüche

1. Regler für Heizungs- und Klimageräte in Kraftfahrzeugen mit einem von einem elektrisch kommutierten Gleichstrommotor (1) angetriebenen Sauglüfter, in dessen Ansaugluftstrom ein Temperatur-Messfühler (7) angeordnet ist, sowie einer den Gleichstrommotor (1) speisenden Ansteuerelektronik (2), die eine Anlaufspannung für den Gleichstrommotor (1) sowie eine periodisch variierende Spannung an einer Antriebswicklung des Gleichstrommotors (1) erzeugt, wobei der Regler mit der Ansteuerelektronik (2) und/oder der Antriebswicklung des Motors (1) verbindbare Messmittel (3, 4) zur Bestimmung und eines zu einer Frequenz der periodischen Spannung an der Antriebswicklung des Gleichstrommotors (1) proportionalen Messwerts aufweist, **dadurch gekennzeichnet, dass** bei ständig an der Antriebswicklung des Gleichstrommotors (1) anliegender Spannung in einem ersten Zeitintervall Δt1 ein erster Messwert bestimmt wird, der proportional zur Frequenz f1 der Spannung im Zeitintervall Δt1 ist, und in einem nachfolgenden Zeitintervall Δt2 ein zweiter Messwert bestimmt wird, der proportional zur Frequenz f2 der Spannung im Zeitintervall Δt2 ist.

2. Regler nach Anspruch 1, **dadurch gekennzeichnet, daß** zur Generierung der Anlaufspannung die periodisch variierende Spannung an der Antriebswicklung kurzzeitig in einem Zeitintervall Δt_{Pause} unterbrochen oder auf einem konstanten Spannungsniveau gehalten wird.

3. Regler nach Anspruch 2, **dadurch gekennzeichnet, daß** sich das erste Zeitintervall Δt1 unmittelbar an ein Zeitintervall Δt_{Pause} mit unterbrochener oder auf konstantem Niveau gehaltener Spannung anschließt.

4. Regler nach einem der vorhergehenden Ansprüche, **dadurch gekennzeichnet, daß** die Spannung an der Antriebswicklung in regelmäßigen Abständen kurzzeitig unterbrochen oder auf einem konstanten Spannungsniveau gehalten wird.

5. Regler nach einem der vorhergehenden Ansprüche, **dadurch gekennzeichnet, daß** ein Komparator (5) zum Vergleich der Frequenzen f1 und f2 vorhanden ist.

6. Regler nach Anspruch 5, **dadurch gekennzeichnet, daß** das Ausgangssignal des Komparators (5) der Ansteuerschaltung (2) zugeführt wird, und abhängig vom Ausgangssignal des Komparators (5) eine Anlaufspannung durch die Ansteuerschaltung (2) erzeugbar ist.

7. Regler nach einem der vorhergehenden Ansprüche, **dadurch gekennzeichnet, daß** es sich um einen Gleichstrommotor (1) mit integriertem Hall-Sensor handelt.

8. Regler nach einem der Ansprüche 1 bis 4, **dadurch gekennzeichnet, daß** es sich um einen Gleichstrommotor (1) handelt, der außer der Antriebswicklung eine Hilfswicklung aufweist, die mit der Ansteuerelektronik (2) verbunden ist.

9. Regler nach einem der vorhergehenden Ansprüche, **dadurch gekennzeichnet, daß** sich der erste bzw. zweite Meßwerte umgekehrt proportional zur Frequenz f1 bzw. f2 verhält.

10. Verfahren zum Betreiben eines elektrisch kommutierten Gleichstrommotors (1), bei dem der Gleichstrommotor (1) mit einer periodisch variierenden Spannung versorgt wird und die periodische Variation der Spannung abschnittsweise kurzzeitig ausgesetzt wird, **dadurch gekennzeichnet, dass** bei ständig an der Antriebswicklung des Gleichstrommotors (1) anliegender Spannung in einem ersten Zeitintervall Δt1 ein erster Messwert bestimmt wird, der proportional zur Frequenz f1 der Spannung im Zeitintervall Δt1 ist und in einem nachfolgenden Zeitintervall Δt2 ein zweiter Messwert bestimmt wird, der proportional zur Frequenz f2 der Spannung im Zeitintervall Δt2 ist.

11. Verfahren nach Anspruch 10, **dadurch gekennzeichnet, daß** die zu den Frequenzen f1 und f2 proportionalen ersten und zweiten Meßwerte miteinander verglichen werden.

12. Verfahren nach Anspruch 10 oder 11, **dadurch gekennzeichnet, daß** aus mindestens einem der zu den Frequenzen f1 bzw. f2 proportionalen Meßwerte die Drehzahl des Gleichstrommotors bestimmt wird.

13. Verfahren nach einem der Ansprüche 10 bis 12, **dadurch gekennzeichnet, daß** sich der erste bzw. zweite Meßwert umgekehrt proportional zur Frequenz f1 bzw. f2 verhält.

14. Verfahren nach einem der Ansprüche 10 bis 12, **dadurch gekennzeichnet, daß** die periodische Variation der Spannung kurzzeitig ausgesetzt wird, wenn der zu der Frequenz f2 proportionale zweite Meßwert kleiner oder gleich dem zu der Frequenz f1 proportionalen ersten Meßwert ist.

## Claims

1. Regulator for heating and air-conditioning appliances in motor vehicles, having a suction fan which is driven by an electrically commutated DC motor (1) and in whose induction air flow a temperature measurement sensor (7) is arranged, as well as having actuation electronics (2) which supply the DC motor (1) and produce a starting voltage for the DC motor (1) as well as a cyclically varying voltage on a drive winding of the DC motor (1), with the regulator having measurement means (3, 4), which can be connected to the actuation electronics (2) and/or to the drive winding of the motor (1), for determining a measurement which is proportional to a frequency of the cyclic voltage on the drive winding of the DC motor (1) **characterized in that**, if a voltage which is applied to the drive winding of the DC motor (1) all the time, in a first time interval Δt1, a first measurement is determined which is proportional to the frequency f1 of the voltage in the time interval Δt1 and, in a subsequent time interval Δt2, a second measurement is determined which is proportional to the frequency f2 of the voltage in the time interval Δt2.

2. Regulator according to Claim 1, **characterized in that**, in order to generate the starting voltage, the cyclically varying voltage on the drive winding is briefly interrupted in a time interval Δt_{Pause} or is kept at a constant voltage level.

3. Regulator according to Claim 2, **characterized in that** the first time interval Δt1 immediately follows a time interval Δt_{Pause} with an interrupted voltage or a voltage kept at a constant level.

4. Regulator according to one of the preceding claims, **characterized in that** the voltage on the driving winding is briefly interrupted at regular intervals, or is kept at a constant voltage level.

5. Regulator according to one of the preceding claims, **characterized in that** a comparator (5) is provided for comparison of the frequencies f1 and f2.

6. Regulator according to Claim 5, **characterized in that** the output signal from the comparator (5) is supplied to the actuation circuit (2), and a starting voltage can be produced by the actuation circuit (2) as a function of the output signal from the comparator (5).

7. Regulator according to one of the preceding claims, **characterized in that** this relates to a DC motor (1) having an integrated Hall sensor.

8. Regulator according to one of Claims 1 to 4, **characterized in that** this relates to a DC motor (1) which, apart from the drive winding, has an auxiliary winding which is connected to the actuation electronics (2).

9. Regulator according to one of the preceding claims, **characterized in that** the first and second measurements are inversely proportional to the frequency f1 and f2, respectively.

10. Method for operating an electrically commutated DC motor (1), in which the DC motor (1) is supplied with a cyclically varying voltage, and the cyclic variation of the voltage is switched off briefly at times, **characterized in that**, in a first time interval Δt1, a first measurement is determined which is proportional to the frequency f1 of the voltage in the time interval Δt1 and, in a subsequent time interval Δt2, a second measurement is determined which is proportional to the frequency f2 of the voltage in the time interval Δt2.

11. Method according to Claim 10, **characterized in that** the first and second measurements, which are proportional to the frequencies f1 and f2, are compared with one another.

12. Method according to Claim 10 or 11, **characterized in that** the rotation speed of the DC motor is determined from at least one of the measurements which are proportional to the frequencies f1 or f2.

13. Method according to one of Claims 10 to 12, **characterized in that** the first and the second measurements are inversely proportional to the frequencies f1 and f2, respectively.

14. Method according to one of Claims 10 to 12, **characterized in that** the cyclic variation of the voltage is switched off briefly when the second measurement, which is proportional to the frequency f2, is less than or equal to the first measurement, which is proportional to the frequency f1.

## Revendications

1. Régulateur pour appareils de chauffage et de conditionnement d'air de véhicules automobiles avec un ventilateur d'extraction entraîné par un moteur à courant continu (1) à commutation électrique, dans le courant d'air d'aspiration duquel est placé un capteur de température (7), ainsi qu'avec une électronique d'excitation (2) alimentant le moteur à courant continu (1), laquelle génère une tension de démarrage pour le moteur à courant continu (1) ainsi qu'une tension à variation périodique sur une bobine de commande du moteur à courant continu (1), le régulateur présentant, pour la détermination d'une valeur de mesure proportionnelle à une fréquence de la tension périodique sur la bobine de commande du moteur à courant continu (1), des moyens de mesure (3, 4) reliables à l'électronique d'excitation (2) et/ou à la bobine de commande du moteur (1), **caractérisé en ce que**, pour une tension appliquée en permanence à la bobine de commande du moteur à courant continu (1), une première valeur de mesure est déterminée dans un premier intervalle de temps Δt1, laquelle est proportionnelle à la fréquence f1 de la tension dans l'intervalle de temps Δt1, et une deuxième valeur de mesure est déterminée dans un intervalle de temps Δt2 suivant, laquelle est proportionnelle à la fréquence f2 de la tension dans l'intervalle de temps Δt2.

2. Régulateur selon la revendication 1, **caractérisé en ce que**, pour générer la tension de démarrage, la tension à variation périodique, sur la bobine de commande, est interrompue pour un temps court dans un intervalle de temps Δtₚₐᵤₛₑ ou maintenue à un niveau de tension constant.

3. Régulateur selon la revendication 2, **caractérisé en ce que** le premier intervalle de temps Δt1 fait directement suite à un intervalle de temps Δtₚₐᵤₛₑ avec une tension interrompue ou maintenue à un niveau constant.

4. Régulateur selon l'une des revendications précédentes, **caractérisé en ce que** la tension, sur la bobine de commande, est interrompue pour un temps court à intervalles réguliers ou maintenue à un niveau de tension constant.

5. Régulateur selon l'une des revendications précédentes, **caractérisé par** la présence d'un comparateur (5) pour comparer les fréquences f1 et f2.

6. Régulateur selon la revendication 5, **caractérisé en ce que** le signal de sortie du comparateur (5) est amené au circuit d'excitation (2) et **en ce qu'**une tension de démarrage peut être générée par le circuit d'excitation (2) en dépendance du signal de sortie du comparateur (5).

7. Régulateur selon l'une des revendications précédentes, **caractérisé en ce qu'**il s'agit d'un moteur à courant continu (1) avec capteur de Hall intégré.

8. Régulateur selon l'une des revendications 1 à 4, **caractérisé en ce qu'**il s'agit d'un moteur à courant continu (1) qui présente, outre la bobine de commande, une bobine auxiliaire reliée à l'électronique d'excitation (2).

9. Régulateur selon l'une des revendications précédentes, **caractérisé en ce que** la première valeur de mesure resp. la deuxième valeur de mesure sont inversement proportionnelles à la fréquence f1 resp. à la fréquence f2.

10. Procédé pour l'exploitation d'un moteur à courant continu (1) à commutation électrique dans lequel le moteur à courant continu (1) est alimenté avec une tension à variation périodique et la variation périodique de la tension est interrompue par sections pour un temps court, **caractérisé en ce que**, pour une tension appliquée en permanence à la bobine de commande du moteur à courant continu (1), une première valeur de mesure est déterminée dans un premier intervalle de temps Δt1, laquelle est proportionnelle à la fréquence f1 de la tension dans l'intervalle de temps Δt1, et une deuxième valeur de mesure est déterminée dans un intervalle de temps Δt2 suivant, laquelle est proportionnelle à la fréquence f2 de la tension dans l'intervalle de temps Δt2.

11. Procédé selon la revendication 10, **caractérisé en ce que** la première valeur de mesure et la deuxième valeur de mesure proportionnelles aux fréquences f1 et f2 sont comparées l'une avec l'autre.

12. Procédé selon la revendication 10 ou 11, **caractérisé en ce que** la vitesse de rotation du moteur à courant continu est déterminée au départ d'au moins l'une des valeurs de mesure proportionnelles aux fréquences f1 resp. f2.

13. Procédé selon l'une des revendications 10 à 12, **caractérisé en ce que** la première resp. la deuxième valeur de mesure sont inversement proportionnelles à la fréquence f1 resp. f2.

14. Procédé selon l'une des revendications 10 à 12, **caractérisé en ce que** la variation périodique de la tension est interrompue pour un temps court si la deuxième valeur de mesure proportionnelle à la fréquence f2 est inférieure ou égale à la première valeur de mesure proportionnelle à la fréquence f1.
